# EUROPÄISCHE PATENTSCHRIFT

(11) **EP 0 811 793 B1**
(45) Veröffentlichungstag und Bekanntmachung des Hinweises auf die Patenterteilung: **30.01.2002**
(21) Anmeldenummer: 97108740.8
(22) Anmeldetag: 02.06.1997
(51) Int. Cl.: F16H 61/22, F16H 63/28

(54) **Vorrichtung zur Neutralstellung eines Getriebes**
Device for setting a gearbox in neutral
Dispositif pour établir le point-mort dans une boîte de vitesses

(30) Priorität: 05.06.1996 DE 19622514
(43) Veröffentlichungstag der Anmeldung: 10.12.1997
(73) Patentinhaber: DEERE & COMPANY, Moline, Illinois 61265-8098 (US)
(72) Erfinder: Altherr, August, 67661 Kaiserslautern (DE); Hücker, Volker, 78315 Radolfszell (DE); Teich, Michael, 68199 Mannheim (DE)
(74) Vertreter: Magin, Ludwig Bernhard

(56) Entgegenhaltungen:
- US-A- 2 812 837
- US-A- 3 505 896
- US-A- 3 898 891
- US-A- 4 069 900
- US-A- 4 217 790
- US-A- 4 541 497
- US-A- 4 798 099

## Beschreibung

Die Erfindung bezieht sich auf eine Bedienungseinrichtung für das Getriebe eines landwirtschaftlichen oder industriellen Fahrzeugs, insbesondere eines Ackerschleppers, mit den Merkmalen des Oberbegriffs des Patentanspruchs 1.

Es ist bekannt, Nutzfahrzeuge mit Parksperren auszurüsten. Die Parksperre ist beim Parken bzw. stationären Gebrauch des Fahrzeuges einzulegen, um dessen Wegrollen zu verhindern. Dies kann beispielsweise durch einen Sperrhebelmechanismus erreicht werden, der durch ein formschlüssiges Eingreifen in eine mit einer Welle in Verbindung stehenden Verzahnung ein Drehen der Welle in der Parkstellung unterbindet.

Die DE-PS-36 36 978 zeigt eine Parksperre für ein Automatikgetriebe, insbesondere im Zusammenhang mit Nutzfahrzeugen. Dabei wird ein Park-Getrieberad, das einstückig mit einer Ausgangswelle ausgebildet ist, mit Hilfe eines Sperrarms gesperrt, so daß eine Drehung der Ausgangswelle während des Parkens nicht möglich ist.

Der Hebel zur Bedienung der Parksperre kann als eigenständiges Bedienelement ausgebildet sein. Es sind jedoch auch Ackerschlepper bekannt, bei denen die Bedienung der Parksperre in einen Gangwahlhebel, der der Auswahl verschiedener Übersetzungsstufen dient, integriert ist. Ferner ermöglicht ein zweiter Hebel die Wahl der Fahrtrichtung. Dieser sogenannte Wendeschalthebel ist vorzugsweise im Griffbereich der linken Hand an der Lenksäule angebracht. Er erlaubt ein Schalten zwischen einer Vorwärts, Neutral und Rückwärtsstellung.

Bei Verwendung eines Parksperrbedienhebels und eines gesonderten Gang- bzw. Fahrtrichtungswahlhebels wird der Gang bzw. Fahrtrichtungswahlhebel nicht zwangsläufig in seine Neutralposition gebracht, wenn die Parksperre eingelegt und das Fahrzeug abgestellt wird. Es ist daher möglich, daß die Bedienungsperson beim erneuten Anlassen des Fahrzeugs übersieht, daß bereits ein Gang eingelegt oder eine Fahrtrichtungsvorwahl erfolgt ist. Löst die Bedienungsperson nun die Parksperre, so setzt sich das Fahrzeug für die Bedienungsperson unbeabsichtigt und unerwartet nach vorn oder zurück in Bewegung. Dies kann zu gefährlichen Situationen führen.

Die US-PS-4,246,989 zeigt eine Anordnung zur Verriegelung eines Getriebeeinstellelements und einer konventionellen Bremse mit Bremsbelägen, die über einen Hydraulikzylinder betätigbar sind und sich bei Druckbeaufschlagung gegen die Kraft einer Feder öffnet. Das Getriebeeinstellelement ist zur Umschaltung zwischen zwei entgegengesetzten Fahrtrichtungen und einer Neutralposition axial verschiebbar und verläuft innerhalb eines Gehäuses, wo es einen Anschlag mit axial gegenüberliegenden Stirnflächen aufweist. Neben dem Anschlag befindet sich eine scherenförmige Anordnung bestehend aus zwei Winkelhebeln, deren Kniepunkte im Gehäuse gelenkig gelagert sind. Die Enden jeweils eines ersten Schenkels der Winkelhebel sind über einen Verbindungsstift miteinander gelenkig verbunden. Die zweiten Schenkel der Winkelhebel sind in etwa parallel zueinander ausgerichtet und werden durch eine Zugfeder aufeinander zugezogen, so daß sie beidseits an den Stirnflächen des Anschlags anliegen und das Getriebeeinstellelement in seine mittlere Neutralposition drücken. Zur Freigabe des Getriebeeinstellelements ist eine Kolbenanordnung vorgesehen, die durch den Bremsdruck beaufschlagt wird. Mit zunehmendem Bremsdruck verschiebt sich der Kolben und drückt auf die Verbindungsstelle der beiden ersten Schenkel. Hierdurch werden die Winkelhebel verschwenkt, so daß sich die Schere gegen die Federkraft öffnet, wobei sich die beiden zweiten Schenkel voneinander wegbewegen. Dies ermöglicht eine freie Verschiebung des Getriebeeinstellelements.

Der bekannte Verriegelungsmechanismus eignet sich nur für die Verwendung mit einer hydraulisch betätigten Bremse. Er weist einen relativ aufwendigen Aufbau auf. Ferner ist es möglich das Getriebeeinstellelement gegen die Kraft der Zugfeder aus seiner Neutralposition zu verschieben, was für Anwendungen mit einer Parksperre nachteilig sein kann.

Aus der gattungsbildenden US-A-4,069,900 geht ein Parksperrsystem für den Antriebsstrang eines durch einen Gangschalthebel zwischen einer Neutralstellung und mehreren Gängen umschaltbaren Getriebes hervor. Zum Einrücken der Parksperre ist ein Parksperrhebel vorgesehen, der sich zwischen einer Freigabestellung und einer Parksperrstellung verschwenken läßt. Der Parksperrhebel steht über ein verdrehbares L-förmiges Hebelelement mit dem Steuerkolben eines Hydraulikventils in Verbindung. Das Hydraulikventil steuert eine Kolbeneinrichtung, durch die sich eine Sperrklinke in Zahneingriff mit einem Getriebezahnrad bringen läßt. Der Zahneingriff wird nur dann aufgehoben, wenn sich der Parksperrhebel in seiner Freigabestellung befindet. An dem Parksperrhebel ist ein Bauteil befestigt, an dessen freiem Arm ein Zwischenglied angelenkt ist, welches mit einem verschwenkbaren Riegel derart in Verbindung steht, daß beim Verschwenken des Parksperrhebels in seine Parksperrstellung der Riegel in die Bewegungsbahn des Gangschalthebels eingreift und den Gangschalthebel in seine Neutralstellung drängt. Durch diesen Mechanismus soll sich der Gangschalthebel automatisch in seine Neutralstellung verschieben, wenn der Parksperrhebel in seine Parkstellung bewegt wird. Der bekannte Mechanismus läßt sich nicht in Verbindung mit einem Bedienelement anwenden, das neben einer Parksperrstellung mehrere Betätigungsstellungen aufweist, um beispielsweise ein Getriebe zwischen mehreren Übertragungsverhältnissen umzuschalten.

Die US-A-4,798,099 beschreibt einen Fahrzeugsteuermechanismus mit einem zwischen Vorwärts, Neutral und Rückwärts einstellbaren Richtungswahlhebel und einem zwischen einer Bremsstellung und einer Neutralstellung bewegbaren Bremshebel. An dem Bremshebel ist eine C-förmige Kurvenscheibe befestigt, die mit einem Ring zusammenwirkt, der drehbar auf einem zylindrischen Ansatz des Richtungswahlhebels montiert ist. Beim Verschwenken des Bremshebels in seine Bremsstellung greift die Kurvenscheibe an dem Ring an und drückt diesen mit dem Richtungswahlhebel in die Neutralstellung. Auch dieser bekannte Mechanismus läßt sich nicht in Verbindung mit einem Bedienelement anwenden, das eine Umschaltung zwischen einer Parksperrstellung und mehreren Betätigungsstellungen erlaubt.

Die US-A-4,217,790 beschreibt ein Federvorrichtung, welche eine relative Bewegung zwischen einem ersten und einem zweiten Element ermöglicht, um die über der Federvorrichtung wirkenden Kräfte elastisch zu begrenzen. Das Federelement verbindet einen Bedienungshebel mit einem Steuerventil. Überschreitet eine zwischen den beiden Elementen wirkende Zugkraft einen vorgebbaren Wert, so wird das erste Element gegen die Kraft einer ersten vorgespannten Feder aus der Federvorrichtung herausgezogen. Überschreitet eine zwischen den beiden Elementen wirkende Druckkraft einen vorgebbaren Wert, so wird das zweite Element gegen die Kraft einer zweiten vorgespannten Feder in die Federvorrichtung hineingedrückt.

Die mit der Erfindung zu lösende Aufgabe wird darin gesehen, eine Bedienungseinrichtung der eingangs genannten Art vorzuschlagen, bei der die genannten Probleme überwunden werden. Wenige, einfach ausgebildete Bauteile sollen es ermöglichen, die Bedierunittel bei eingelegter Parksperre in ihrer Neutralstellung zu verriegeln. Die Bedienungseinrichtung soll im wesentlichen mechanisch ausbildbar und bei einer Mehrhebelbedienung von Getriebe und Parksperre anwendbar sein. Insbesondere soll die Betriebssicherheit erhöht werden, indem sichergestellt wird, daß die Bedienungsperson beim Anfahren des Fahrzeugs die Fahrtrichtung bewußt wählt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Lösung erlaubt es der Bedienungsperson nicht, das Fahrzeug, beispielsweise einen Ackerschlepper, in Bewegung zu setzen, indem nach dem Ingangsetzen des Fahrzeugmotors lediglich die Parksperre gelöst wird. Vielmehr muß die Bedienungsperson nach dem Lösen der Parksperre zum Anfahren das erste Bedienungselement aus seiner Neutralposition in eine seiner Übersetzungspositionen, beispielsweise in eine Vorwärts oder Rückwärts-Fahrtrichtungsposition, bringen. Denn mit dem Einlegen des zweiten Bedienelements in seine Parkposition springt das erste Bedienelement (Fahrtrichtungshebel) automatisch in seine neutrale Sicherheitslage. Der Fahrer ist daher genötigt, beim erneuten Anfahren das erste Bedienelement bewußt aus seiner Neutralposition in die gewünschte Gang oder Richtungsposition einzulegen. Versucht der Fahrer bei mit dem zweiten Bedienelement eingelegter Parksperre eine Fahrtrichtung mit dem ersten Bedienelement auszuwählen, so springt das erste, vorzugsweise federvorgespannte Bedienelement immer wieder in seine Neutralposition zurück bzw. wird in dieser Lage festgehalten. Nur bei gelöster Parksperre läßt sich eine Fahrtrichtung mit dem ersten Bedienelement dauerhaft auswählen.

Die erfindungsgemäße Bedienungseinrichtung läßt sich mit wenigen, einfach ausgebildeten Bauteilen herstellen. Sie wirkt mechanisch, so daß auf elektrische oder hydraulische Versorgungskreise verzichtet werden kann. Sie führt zu einer Erhöhung der Betriebssicherheit, da Fehlbedienungen vermieden werden.

Durch die erfindungsgemäße Lösung läßt sich zwischen dem ersten der Fahrtrichtungsauswahl dienenden Bedienelement und dem zweiten der Parksperre dienenden Bedienelement ein mechanisch funktioneller Zusammenhang herstellen auch wenn die Bedienelemente räumlich getrennt sind. Da die drehbare Übertragungswelle zwangsweise in ihre Neutralposition übergeht, wenn das zweite Bedienelement in seine Parksperrposition gebracht wird, muß die Bedienungsperson nach dem Lösen des zweiten Bedienelements bewußt eine Fahrtrichtung am ersten Bedienelement auswählen, um anzufahren.

Um die Übertragungswelle in eine Neutralstellung zu bringen, greifen an dieser Kräfte an, die sie aus einer beliebigen Position zwangsläufig in eine Neutralstellung bringen. Bei einer Übertragungswelle, die sich aus ihrer Neutralstellung in zwei gegensinnige Richtungen bewegen läßt, ist es vorteilhaft zwei Kräfte mit entgegengesetzt gerichteten Kraftkomponenten auf die Übertragungswelle einwirken zu lassen, um diese in ihre Neutralstellung zu bringen.

An der drehbar gelagerten Übertagungswelle greifen Schaltkräfte in radialem Abstand zur Drehachse an, wobei sich zwischen Achse und Angriffspunkt ein Hebelarm ergibt, durch den ein zum Drehen des Betätigungselements notwendiges Drehmoment aufgebracht werden kann.

Vorzugsweise ist das erste Bedienelement ein Wendeschalthebel (Reverser) mit den Wahlmöglichkeiten Vorwärts, Neutral und Rückwärts. Die Verriegelungsmittel sind dabei derart ausgebildet, daß sie beim Einrücken der Parksperre die Übertragungswelle aus ihrer jeweiligen Vorwärts- oder Rückwärtsgangposition in ihre Neutralposition verdrehen. Der Wendeschalthebel kann zweckmäßigerweise links an der Lenksäule des Fahrzeugs befestigt sein, so daß er durch die linke Hand der Bedienungsperson bedient wird.

Das zweite Bedienelement ist vorzugsweise als Gangwahlhebel zur Auswahl verschiedener Übersetzungsstufen eines Getriebes ausgebildet. Zusätzlich zu den Gangpositionen läßt sich der Gangwahlhebel in eine Neutralstellung und eine Parkposition zum Einrücken der Parksperre bringen.

Als durch das zweite Bedienungslement beeinflußbarer Verriegelungshebel braucht kein gesondertes neues Bauteil eingeführt zu werden. Vielmehr kann als Verriegelungshebel ein um eine Achse verschwenkbarer und entsprechend angepaßter Zwischenhebel des Parksperrgestänges dienen, der einen außerhalb der Achse liegenden Angriffspunkt aufweist, an dem die Übertragungsmittel angreifen.

Der auf der Übertragungswelle befestigte Übertragungshebel weist vorzugsweise zwei auf unterschiedlichen Drehwinkellagen der Übertragungswelle liegende Angriffspunkte auf, an denen je ein Übertragungsmittel derart angreift, daß eine Kraftübertragung möglich ist, durch die die Übertragungswelle aus einer Vorwärts- oder Rückwärtsposition in eine mittlere Neutralpostion verdrehbar ist.

Um die notwendigen Kräfte zu übertragen, ist es vorteilhaft als Übertragungsmittel Zugvorrichtungen vorzusehen, die bevorzugt in Form von Seilzügen auszuführen sind. Durch eine geeignete Seilführung läßt sich eine flexible Anpassung an den vorhandenen Bauraum vornehmen. Als Übertragungsmittel sind jedoch auch andere Möglichkeiten gegeben, wie z. B. der Einsatz von Ketten, Hebelkombinationen, Zylindervorrichtungen u.a..

Die Zugvorrichtungen sind mit ihrem jeweils ersten Ende an unterschiedlichen Angriffspunkten des Übertragungshebel der Übertragungswelle angebracht. Mit ihrem jeweils zweiten Ende greifen die Zugvorrichtungen vorzugsweise über einen gemeinsamen Anfriffspunkt an einem Hebel an, der durch das zweite Bedienelement, mit dem die Parksperre ein und ausgerückt wird, verstellbar ist. Dadurch läßt sich eine direkte Kopplung von Parksperre und Übertragungswelle erreichen.

Eine weitere bevorzugte Ausbildung der Erfindung sieht vor, daß die Übertragungsmittel wenigstens eine Verbindungslasche enthalten, deren eines Ende an dem Verriegelungshebel und deren anderes Ende an dem Übertragungshebel angreift. Die Verbindungslasche weist wenigstens ein Langloch auf, in welchem sich einer der Angriffspunkte bis zu einem Anschlag gleitend verschieben läßt.

Wie erwähnt wurde, soll bei eingeschalteter Parksperre die Übertragungswelle in ihrer Neutralstellung festgehalten werden. Versucht in diesem Fall die Bedienungsperson das erste Bedienelement aus seiner Neutralposition zu bewegen, so werden Zug oder Druckkräfte auf das Verbindungsgestänge zur Übertragungswelle übertragen. Um zu vermeiden, daß die Bedienungseinrichtung durch zu große Zug oder Druckkräfte beschädigt wird, sieht eine bevorzugte Ausgestaltung der Erfindung vor, daß die Übertragungsmittel wenigstens eine vorgespannte Zugfeder enthalten, deren eines Ende an einem Angriffspunkt des Verriegelungshebels und deren anderes Ende an einem Angriffspunkt des Übertragungshebels eingehängt sind. Wenigstens ein Ende der Zugfeder weist eine sich in Längsrichtung erstrekende Schlaufe auf, in welcher sich einer der Angriffspunkte bis zu einem Anschlag gleitend verschieben läßt. Die Zugfeder kann eine auf Block gewikelte Schraubenfeder mit Vorspannung sein. Sie ist vorzugsweise so ausgelegt, daß ihre Länge bei kleineren Zugkräften konstant bleibt und sich bei Überschreiten einer vorgebbaren Federvorspannung mit zunehmender Zugkraft vergrößert.

Zur Aufnahme größerer Zug und Druckkräfte kann es auch vorteilhaft sein, zwischen dem ersten Bedienelement und dem Übertragungshebel eine Federanordnung mit wenigstens einem vorgespannten Federelement einzufügen. Das Federelement wird dabei so ausgelegt, daß seine Länge bei kleineren Zug und Druckkräften konstant bleibt und bei Überschreiten einer vorgebbaren Federvorspannung verringerbar oder vergrößerbar ist. Diese Ausbildung schützt die Vorrichtung vor Überlast bei dem Versuch des Fahrers mit überhöhter Kraft das erste Bedienelement aus seiner Neutralposition zu bewegen, sofern die Übertragungswelle in ihrer Neutralposition verriegelt ist.

Bei einer einfachen Ausführungsform, die sich für Schaltgetriebe besonders eignet, besitzt der auf die Übertragungswelle aufgesetzte Übertragungshebel drei Schenkel, wobei das äußere Schenkelpaar einen Winkel einschließt, der beispielsweise 90° beträgt, jedoch auch andere geeignete Werte einnehmen kann. An den äußeren Schenkeln greift jeweils ein Ende eines Übertragungsmittels, beispielsweise eines Seilzugs oder einer Zugfeder an, dessen jeweils anderes Ende an einem Verriegelungshebel befestigt ist. Der Verriegelungshebel wird durch das zweite Bedienelement betätigt. An einem mittleren Schenkel des Übertragungshebels, der beispielsweise in der Mitte zwischen den beiden äußeren Schenkeln liegt, greift das zum ersten Bedienelement führende Übertragungsgestänge an. Dies geschieht bevorzugt tangential, da so eine besonders günstige Kraftübertragung erfolgt und das Übertragungsgestänge nur auf Zug und Druck aber nicht auf Biegung beansprucht wird.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Übertragungsvorrichtung zwischen einem Wendeschalthebel und einem an einer Getriebeübertragungswelle befestigbaren Übertragungshebel,
- Fig. 2: eine Schaltkulisse mit einem Schalthebel,
- Fig. 3: eine Verriegelungseinrichtung und
- Fig. 4: eine Zugfeder.

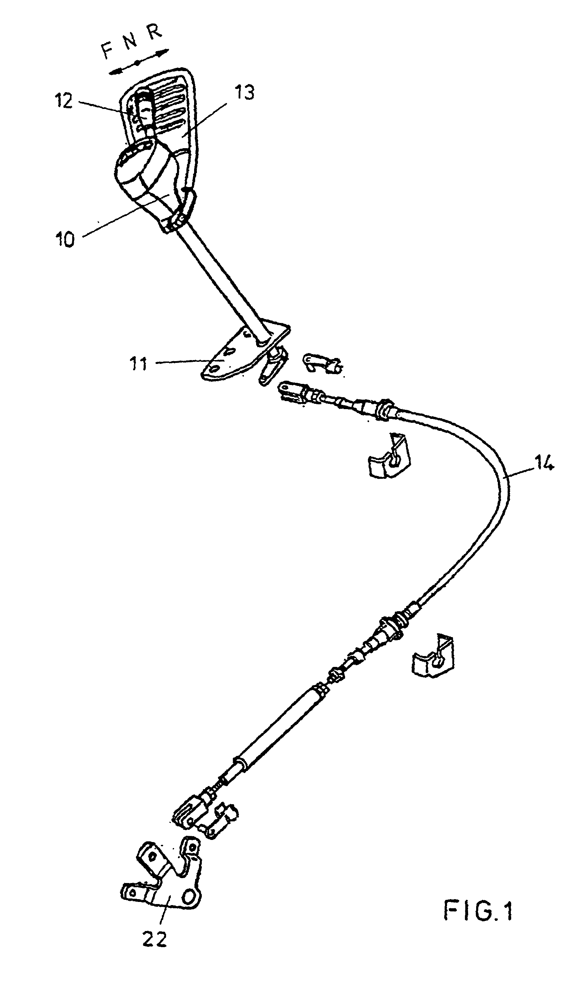

Aus Fig. 1 geht ein Wendeschalthebel 12 hervor, der in einem Führungsgehäuse 10 drehbar gelagert ist. Das Führungsgehäuse 10 ist über eine Befestigungsplatte 11 auf der linken Seite an einer nicht näher dargestellten Lenksäule eines Akerschleppers befestigbar. Es trägt einen Schutz 13, der den Wendeschalthebel 12 beim Lenken gegen unbeabsichtigtes Schalten schützen soll. Der Wendeschalthebel 12 stellt ein erstes Bedienelement dar und läßt sich aus einer mittleren Neutralposition N in eine Vorwärtsposition F und eine Rückwärtsposition R verschwenken.

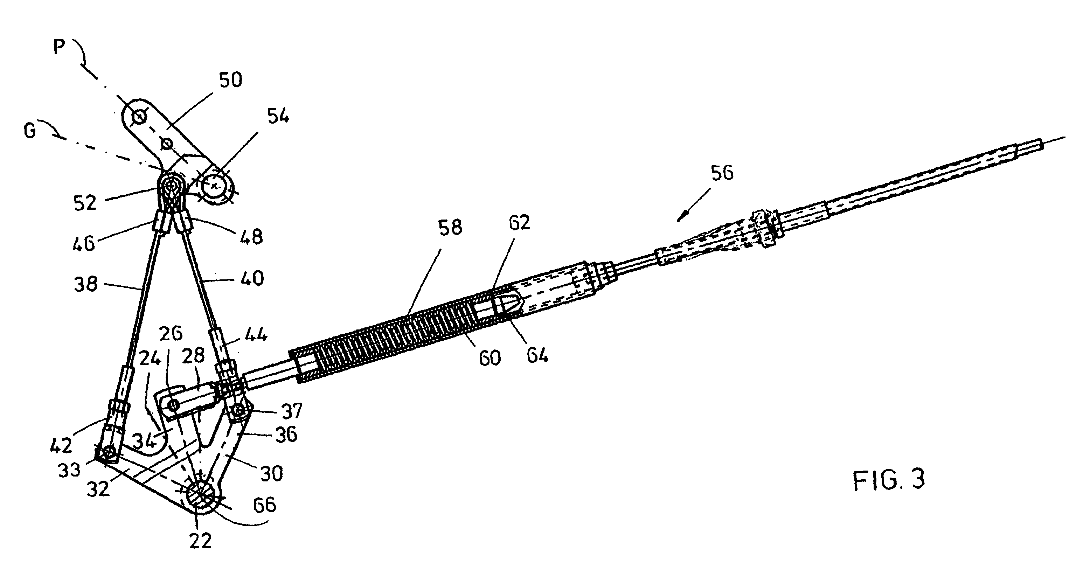

Die Schwenkbewegung des Wendeschalthebels 12 wird über einen Seilzug 14 auf einen Übertragungshebel 30 übertragen, der später im Zusammenhang mit der Fig. 3 näher beschrieben wird.

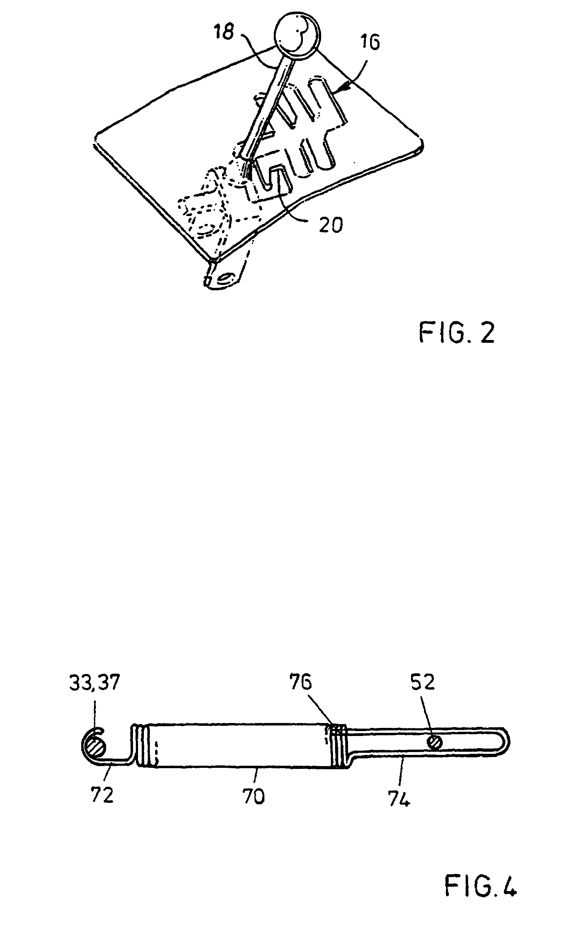

Im Bereich der rechten Hand des Fahrers befindet sich die in Fig. 2 dargestellte Schaltkulisse 16 mit einem zweiten Bedienelement 18 vorzugsweise einem Bedienhebel der zur Auswahl verschiedener Übersetzungsverhältnisse bzw. verschiedener Gangstufen dient. In dieser Schaltkulisse 16 ist auch eine Parkposition 20 für den Bedienhebel 18 vorgesehen, in die der Bedienhebel 18 zum Einrücken der Parksperre gebracht werden kann.

Fig. 3 zeigt eine Vorrichtung zur Neutralstellung eines Getriebes, die einen funktionellen Zusammenhang zwischen dem Bedienhebel 18 und dem Wendeschalthebel 12 herstellt. Die Vorrichtung gewährleistet, daß der Wendeschalthebel 12, und mit ihm der Übertagungshebel 30 und eine Übertragungswelle 22, immer dann eine mittlere Neutralposition N einnimmt, wenn der Bedienhebel 18 in seine Parkposition 20 gebracht wird oder sich dort befindet.

In Fig. 3 ist eine Übertragungswelle 22 dargestellt, die in einem nicht näher dargestellten Getriebe drehbar gelagert ist und sich zwischen einer Vorwärtsposition 24, Rückwärtsposition 28 und einer mittleren Neutralposition 26 verschwenken läßt, um das Getriebe zwischen vorwärts, rückwärts und neutral zu schalten und die Fahrtrichtung des Fahrzeugs vorzugeben.

Die Übertragungswelle 22 trägt drehfest einen Übertragungshebel 30, der drei radial von der Drehachse abstehende, in einer Ebene liegende Schenkel 32, 34, 36 aufweist. Die beiden äußeren Schenkel 32, 36 schließen einen Winkel von etwa 90° ein. In der Mitte zwischen den beiden äußeren Schenkeln 32, 36 befindet sich ein mittlerer Schenkel 34.

An jeweils einem Angriffspunkt 33, 37 der beiden äußeren Schenkeln 32, 36 des Übertragungshebels 30 greift ein Ende 42, 44 eines Seilzugs 38, 40 an. Die jeweils anderen Enden 46, 48 der Seilzüge 38, 40 greifen an einem gemeinsamen Angriffspunkt 52 eines Hebels 50, auch Verriegelungshebel genannt, an. Der Hebel 50 ist um eine Achse 54 drehbar gelagert, wobei der Angriffspunkt 52 der beiden Seilzüge 38, 40 außerhalb dieser Achse 54 liegt. Der Hebel 50 ist ein Zwischenhebel des nicht näher dargestellten Verbindungsgestänges, daß den in Fig. 2 dargestellten Bedienhebel 18 mit einer Parksperreinrichtung und einem schaltbaren Getriebe verbindet. Wenn der Bedienhebel 18 durch die Bedienungsperson in seine Parkposition 20 oder aus dieser heraus gebracht wird, wird der Hebel 50 zwischen seiner Parkstellung P und einer entriegelten Stellung G, in der z. B. ein Gang eingelegt ist, verschwenkt. Die weitere Funktionsweise wird später erläutert.

An dem mittleren Schenkel 34 des Übertragungshebels 30 greifen Übertragungsmittel 56 an, die über einen Seilzug 14 mit dem in Fig. 1 gezeigten Wendeschalthebel 12 verbunden sind, so daß die Übertragungswelle 22 mittels des Wendeschalthebels 12 zwischen ihren drei Positionen 24, 26, 28 verschwenkbar ist. Innerhalb der als Übertragungsgestänge ausgeführten Übertragungsmittel 56 ist eine Federanordnung 58, bestehend aus einer schraubenförmigen Feder 60 sowie einem Außen und einem Innenrohr 62, 64, vorgesehen, auf deren Funktion später eingegangen wird.

Im Folgenden wird die Funktionsweise der Vorrichtung erläutert:

Durch die erfindungsgemäße Vorrichtung wird ein funktioneller Zusammenhang zwischen der Position des Bedienhebels 18, insbesondere in bezug darauf, ob die Parksperre ein oder ausgerückt ist, und dem Wendeschalthebel 12 hergestellt..

Der Wendeschalthebel 12 wirkt über das Übertragungsgestänge 56 und den Übertragungshebel 30 auf die Übertragungswelle 22. Durch die Bewegung des Wendeschalthebels 12 läßt sich der Übertragungshebel 30 und damit die Übertragungswelle 22 um ihre Drehachse 66 in ihre verschiedenen Positionen 24, 26, 28 verschwenken. Die Übertragungsmittel 56 greifen etwa tangential an dem mittleren Schenkel 34 an. Es ist auch eine davon abweichende Anordnung denkbar.

Die innerhalb der Übertragungsmittel 56 vorgesehene Federanordnung 58 ist während normaler Schaltvorgänge wirkungslos. Das heißt bei Schaltbewegungen verändert sich die Länge der Feder 60 und nicht, da diese so ausgelegt ist, daß sie erst bei größeren Kräften als den normalen Schaltkräften zusammengedrückt oder auseinandergezogen wird.

Wenn der Bedienhebel 18 in seine Parkposition 20 gebracht wird und damit ein Einrücken der Parksperre erfolgt, wird der Hebel 50 um seine Achse 54 nach oben (bezüglich der Fig. 3) in seine Parkstellung P verschwenkt. Dadurch werden die beiden Seilzüge 38, 40 gespannt. Die an den Seilzügen 38, 40 angreifenden Zugkräfte wirken auf den Übertragungshebel 30 und zwingen diesen in seine mittlere Neutralposition 26.

Die durch die Seilzüge 38, 40 übertragenen und an dem Übertragungshebel 30 angreifenden Kräfte, lassen sich in ein Kräfteparallelogramm zerlegen, in dem jeweils eine Kraftkomponente tangential an dem jeweiligen äußeren Schenkel 32, 36 angreift. Diese Kraftkomponenten wirken jeweils einer Auslenkungsrichtung der Übertragungswelle 22 entgegen, so daß diese jeweils aus ihrer Vorwärts bzw. Rückwärtsposition 24, 28 in ihre Neutralposition 26 gezogen wird.

Die Übertragungswelle 22 nimmt folglich ihre Neutralposition 26 ein, wenn der Bedienhebel 18 in seine Parkposition 20 gebracht wird. Solange sich der Bedienhebel 18 in seiner Parkposition 20 befindet ist wegen der durch die Seilzüge 38, 40 übertragenen Kraftkomponenten, die der Verdrehung der Übertragungswelle 22 entgegenwirken, die Übertragungswelle 22 in ihrer Neutralposition festgelegt. Der Wendeschalthebel 12 steht über die Übertragungsmittel 56 mit dem Übertragungshebel 30 in Verbindung und folgt dessen Bewegung in die Neutralposition.

Wird durch die Bedienungsperson aus dieser festgelegten oder verriegelten Neutralposition 26 der Übertragungswelle 22 der Versuch unternommen, mittels des Wendeschalthebels 12 eine Fahrtrichtung zu wählen, so greift an dem mittleren Schenkel 34 des Übertragungshebels 30 eine zusätzliche tangentiale Kraftkomponente an, die gegen die durch die Seilzüge 38, 40 wirkenden Kraftkomponenten bestrebt ist, die Übertragungswelle 22 zu verdrehen.

Dies könnte zu einer unnötigen Belastung der Bedienungseinrichtung und insbesondere der Seilzüge 38, 40 und zu einem verfrühten Verschleiß und Reißen derselben führen. Die Federanordnung 58 innerhalb der Übertragungsmittel 56 dient dazu, die auftretenden Schaltkräfte in der Art einer Überlastsicherung aufzunehmen. Die Federanordnung 58 ist bezüglich ihrer Konstruktion und der Federkonstante der Feder 60 so ausgelegt, daß sich die Feder 60 bei Kräften (beispielsweise bis zu 12 kg), die bei normalen Schaltvorgängen auftreten, nicht verformt. Erst bei mißbrauchlicher Betätigung des Wendeschalthebels 12, bei der die üblichen Schaltkräfte bis um das 10-fache überschritten werden können, verformt sich die Feder 60 und nimmt die Überlastkräfte auf.

An Stelle der in Fig. 3 gezeigten Seilzüge 38, 40 können als Übertragungsmittel auch Zugfedern dienen. Eine derartige Zugfeder 70 ist in Fig. 4 dargestellt. Die Zugfeder 70 weist einen mittleren schraubenförmig ausgebildeten Federabschnitt auf, der an seinen beiden Enden in jeweils eine Schlaufe 72, 74 übergeht. Die Windungen des Federabschnitts sind derart auf Block gewickelt, daß die Zugfeder 70 eine vorgebbare Vorspannung aufweist. Die beiden Schlaufen 72, 74 der Zugfeder 70 sind in die Angriffspunkte 33, 37 des Hebels 30 und den Angriffspunkt 52 des Zwischenhebels 50 eingehängt. Die Schlaufe 74 erstreckt sich in Längsrichtung, so daß eine Relativbewegung zwischen Schlaufe 74 und Angriffpunkt 52 zwischen der dargestellten mittleren Lage und einer Anschlaglage, bei welcher der Angriffspunkt 52 an dem äußeren Schlaufenende anliegt, möglich ist. Das Drahtende 76 der Schlaufe 74 erstreckt sich bis in den Federabschnitt hinein, wodurch ein Aufbiegen der Schlaufe 74 verhindert wird.

Die in die erfindungsgemäße Vorrichtung gemäß Fig. 3 eingebaute Zugfeder 70 wirkt wie folgt:

Nimmt der Zwischenhebel 50 seine entriegelte Stellung G ein, so befindet sich der Angriffspunkt 52 im mittleren Bereich der Schlaufe 74 und die Zugfeder 70 überträgt keine Kräfte von dem Zwischenhebel 50 auf den Hebel 30. Wird der Zwischenhebel 50 dann in seine Parkstellung P verschwenkt, so gleitet der Angriffspunkt 52 in der Schlaufe 74 nach außen bis er an dem umgebogenen Schlaufenende anliegt. Jetzt wird über die Zugfeder 70 eine Kraft von dem Zwischenhebel 50 auf den Hebel 30 übertragen, die den Hebel 30 in seine mittlere Neutralposition 26 bewegt.

Bei diesem Vorgang bleiben normalerweise die Windungen der Zugfeder 70 auf Block liegen und die Feder verhält sich wie ein starres Übertragungselement. Erst wenn durch den Wendeschalthebel 12 eine Kraft auf den Hebel 30 übertragen wird, die die normale Schaltkraft von beispielsweise 12 kg übersteigt, dehnt sich die Zugfeder 70 aus und erlaubt ein vorübergehendes Verdrehen der Übertragungswelle 22 aus ihrer Neutralposition. Gibt die Bedienungsperson den Wendeschalthebel 12 wieder frei, bewegt sich dieser mit dem Hebel 30 und mit der Übertragungswelle 22 aufgrund der Federkraft der Zugfeder 70 wieder in seine Neutralposition. Bei Anwendung der Zugfeder 70 sind somit die in Fig. 3 dargestellten Übertragungsmittel 56 entbehrlich.

Aus der vorstehenden Beschreibung sowie der Zeichnung ergeben sich für den Fachmann viele verschiedenartige Alternativen, Modifikationen und Varianten, die unter die vorliegenden Ansprüche fallen.

Beispielsweise ist es denkbar, die Seilzüge 38, 40 oder Zugfedern 70 durch andere Mittel zur Neutralstellung der Betätigungsmittel, die in der Lage sind Zugkräfte zu übertragen, zu ersetzen. Denkbar ist zum Beispiel der Einsatz von Ketten, Zug-Druck-Kabeln, Gasfedern u.a..

## Patentansprüche

1. Bedienungseinrichtung für das Getriebe eines landwirtschaftlichen oder industriellen Fahrzeugs mit einem ersten Bedienelement (12), welches auf Betätigungsmittel zur wahlweisen Einstellung des Getriebes in eine Neutralposition oder in wenigstens eine Übersetzungsposition einwirkt, mit einem zweiten Bedienelement (18), das zumindest dem Ein- und Ausrücken einer Parksperre dient, und mit Mitteln zur Verriegelung der Betätigungsmittel durch das zweite Bedienelement (18), derart, daß die Betätigungsmittel beim Einrücken der Parksperre in ihre Neutralposition übergehen und solange in der Neutralposition gehalten werden, wie das zweite Bedienelement (18) in seiner Parkstellung verharrt, wobei die Betätigungsmittel eine drehbare Übertragungswelle (22) mit wenigstens einem drehfesten, radial abstehenden Übertragungshebel (30) enthalten und durch das zweite Bedienelement (18) wenigstens ein Verriegelungshebel (50) beeinflußbar ist und wobei zwischen dem Verriegelungshebel (50) und dem Übertragungshebel (30) Übertragungsmittel (38, 40) angeordnet sind, die beim Einrücken der Parksperre Kräfte von dem Verriegelungshebel (50) auf den Übertragungshebel (30) übertragen, um die Übertragungswelle (22) in ihre Neutralposition zu bringen oder in dieser zu halten, **dadurch gekennzeichnet, daß** als Übertragungsmittel (38, 40) zwei Zugelemente dienen, die im gespannten Zustand Zugkräfte übertragen und deren jeweils eine Enden am Verriegelungshebel (52) angreifen und deren zweite Enden an zwei unterschiedlichen Angriffspunkten (33, 37) des Übertragungshebels (30) angreifen, wobei die Angriffspunkte (52) des Verriegelungshebels (50) und die Angriffspunkte (33, 37) des Übertragungshebels (30) sowie die Auslegung der Zugelemente so gewählt sind, daß sich der Übertragungshebel (30) aus seiner mittleren Neutralposition (26) in eine seiner Übersetzungspositionen (24, 28) in beide Richtungen verschwenken läßt, sofern sich der Verriegelungshebel (50) in einer entriegelten Stellung (G) befindet, und daß die Zugelemente (38, 40) Zugkräfte auf den Übertragungshebel (30) übertragen und diesen in seine Neutralposition bringen, sofern der Verriegelungshebels (50) in seine Parksperrstellung (P) bewegt wird.

2. Einrichtung nach Anspruch 1, **dadurch gekennzeichnet, daß** die Parksperre nur dann einrückbar ist, wenn gleichzeitig die Übertragungswelle (22) ihre Neutralposition einnimmt.

3. Einrichtung nach Anspruch 1 oder 2, **dadurch gekennzeichnet, daß** durch das erste Bedienelement (12) die Übertragungswelle (22) zwischen wenigstens einer Vorwärts, einer mittleren Neutral und wenigstens einer Rückwärtsgangposition verdrehbar ist, und daß die Verriegelungsmittel derart ausgebildet sind, daß sie beim Einrücken der Parksperre die Übertragungswelle (22) aus ihrer jeweiligen Vorwärts oder Rückwärtsgangposition in ihre Neutralposition verdrehen.

4. Einrichtung nach einem der Ansprüche 1 bis 3, **dadurch gekennzeichnet, daß** durch das zweite Bedienelement (18) wahlweise ein Getriebe zwischen mehreren Übertragungsverhältnissen und einer Neutralstellung umschaltbar sowie eine Parkstellung einrückbar ist.

5. Einrichtung nach einem der Ansprüche 1 bis 4, **dadurch gekennzeichnet, daß** der Verriegelungshebel (50) ein um eine Achse (54) verschwenkbarer Zwischenhebel eines Parksperrgestänges ist und wenigstens einen außerhalb der Achse (54) liegenden Angriffspunkt (52) aufweist, an dem die Übertragungsmittel (38, 40) angreifen.

6. Einrichtung nach einem der Ansprüche 1 bis 5, **dadurch gekennzeichnet, daß** der Übertragungshebel (30) zwei auf unterschiedlichen Drehwinkellagen der Übertragungswelle (22) liegende Angriffspunkte (33, 37) aufweist, an denen je ein Übertragungsmittel (38, 40) derart angreift, daß eine Kraftübertragung möglich ist, durch die die Übertragungswelle (22) aus einer Vorwärts- oder Rückwärtsposition in eine mittlere Neutralposition verdrehbar ist.

7. Einrichtung nach einem der Ansprüche 1 bis 6, **dadurch gekennzeichnet, daß** als Übertragungsmittel (38, 40) wenigstens ein Zugmechanismus dient, der die Übertragungswelle (22) beim Einrücken der Parksperre in ihre Neutralposition schaltet.

8. Einrichtung nach einem der Ansprüche 1 bis 7, **dadurch gekennzeichnet, daß** die jeweils ersten Enden der Zugelemente (38, 40) an einem gemeinsamen Angriffspunkt (52) des Verriegelungshebels (52) angreifen.

9. Einrichtung nach einem der Ansprüche 1 bis 8, **dadurch gekennzeichnet, daß** die Übertragungsmittel wenigstens einen Seilzug (38, 40) enthalten, dessen eines Ende an dem Verriegelungshebel (50) und dessen anderes Ende an wenigstens einem Übertragungshebel (30) angelenkt ist und der bei ausgerückter Parksperre lose ist und sich beim Einrücken der Parksperre spannt.

10. Einrichtung nach einem der Ansprüche 1 bis 9, **dadurch gekennzeichnet, daß** die Übertragungsmittel wenigstens eine Verbindungslasche enthalten, deren eines Ende an dem Verriegelungshebel (50) und deren anderes Ende an dem Übertragungshebel (30) angreift, und daß die Verbindungslasche wenigstens ein Langloch aufweist, in welchem einer der Angriffspunkte sich bis zu einem Anschlag gleitend verschieben läßt.

11. Einrichtung nach einem der Ansprüche 1 bis 10, **dadurch gekennzeichnet, daß** die Übertragungsmittel wenigstens eine vorgespannte Zugfeder (70) enthalten, deren eines Ende an einem Angriffspunkt (52) des Verriegelungshebels (50) und deren anderes Ende an einem Angriffspunkt (33, 37) des Übertragungshebels (30) eingehängt ist, wobei wenigstens ein Ende der Zugfeder (70) eine sich in Längsrichtung erstrekende Schlaufe (74) aufweist, in welcher einer der Angriffspunkte (52) sich bis zu einem Anschlag gleitend verschieben läßt.

12. Einrichtung nach einem der Ansprüche 1 bis 11, **dadurch gekennzeichnet, daß** das erste Bedienelement (12) unmittelbar oder mittelbar an dem Übertragungshebel (30) angreift.

13. Einrichtung nach einem der Ansprüche 1 bis 12, **dadurch gekennzeichnet, daß** der Übertragungshebel (30) drei im wesentlichen radial von der Drehachse (66) abstehende, vorzugsweise in einer Ebene liegende Schenkel (32, 34, 36) aufweist, wobei an zwei äußeren Schenkeln (32, 36), die miteinander einen Winkel von etwa 90° einschließen, jeweils ein Übertragungsmittel (38, 40) angreift und an einem mittleren Schenkel (34), der in etwa in der Mitte zwischen den äußeren Schenkeln (32, 36) liegt, das erste Bedienelement (12) unmittelbar oder mittelbar angreift.

14. Einrichtung nach einem der Ansprüche 1 bis 13, **dadurch gekennzeichnet, daß** zwischen dem ersten Bedienelement (12) und der Übertragungswelle (22) bzw. dem Übertragungshebel (30) eine Federanordnung mit wenigstens einem vorgespannten Federelement (60) eingefügt ist, das derart ausgelegt ist, daß seine Länge bei kleineren Zug und Druckkräften konstant bleibt und bei Überschreiten einer vorgebbaren Federvorspannung verringerbar oder vergrößerbar ist.

## Claims

1. A control device for the gearbox of an agricultural or industrial vehicle, with a first operating element (12), which operates on actuating means for selective setting of the gearbox in a neutral position or in at least one ratio position, a second operating element (18) which serves at least for engaging and disengaging a parking lock, and means for so interlocking the actuating means by the second operating element (18) that the actuating means enter their neutral position on engaging the parking lock and are kept in the neutral position for as long as the second operating element (18) stays in its park position, wherein the actuating means include a rotatable transmission shaft (22) with at least one radially projecting, radially fast transmission lever (30) and at least one locking lever (50) can be affected by the second operating element (18) and wherein transmission means (38, 40) are arranged between the locking lever (50) and the transmission lever (30) and transfer force from the locking lever (50) to the transmission lever (30) on engaging the parking lock, in order to bring the transmission shaft (22) into, or hold it in, its neutral position, **characterized in that** two tension elements serve as the transmission means (38, 40) and transmit tension forces in the tensioned state and whose first ends each engage on the locking lever (52) and whose second ends engage on two different points of engagement (33, 37) of the transmission lever (30), wherein the point of engagement (52) of the locking lever (50) and the points of engagement (33, 37) of the transmission lever (30) as well as the arrangement of the tension elements are so selected that the transmission lever (30) can turn in both directions out of its middle, neutral position (26) into one of its ratio positions (24, 28), insofar as the locking lever (50) is in an unlocked position (G), and **in that** the tension elements (38, 40) transfer tension forces to the transmission lever (30) and bring this into its neutral position insofar as the locking lever (50) is moved into its parking lock position (P).

2. A device according to claim 1, **characterized in that** the parking lock can only be disengaged when the transmission shaft (22) simultaneously assumes its neutral position.

3. A device according to claim 1 or 2, **characterized in that** the transmission shaft (22) can be turned by the first operating element (12) between at least one forward position, a central neutral position and a reverse position and **in that** the locking means are so designed that they turn the transmission shaft (22) out of its current forward or reverse position into its neutral position on engaging the parking lock.

4. A device according to any of claims 1 to 3, **characterized in that** a gearbox can be selectively shifted by the second operating element (18) between a plurality of transmission ratios and a neutral position and be engaged in a park position.

5. A device according to any of claims 1 to 4, **characterized in that** the locking lever (50) is an intermediate lever of a parking lock linkage which can turn about an axis (54) and has at least one point of engagement (52) lying outside the axis (54), at which the transmission means (38, 40) engage.

6. A device according to any of claims 1 to 5, **characterized in that** the transmission lever (30) has two points of engagement (33, 37) lying at different angular positions of the transmission shaft (22), at which respective transmission means (38, 40) so engage that force transmission is possible, through which the transmission shaft (22) can be turned out of its forward or reverse position into a central neutral position.

7. A device according to any of claims 1 to 6, **characterized in that** at least one tension mechanism serves as transmission means (38, 40) and shifts the transmission shaft (22) into its neutral position on engaging the parking lock.

8. A device according to any of claims 1 to 7, **characterized in that** the respective first ends of the tension elements (38, 40) engage at a common point of engagement (52) of the locking lever (50).

9. A device according to any of claims 1 to 8, **characterized in that** the transmission means include at least one pull cable (38, 40), whose one end is attached to the locking lever (50) and whose other end is attached to at least one transmission lever (30) and which is slack with the parking lock disengaged and is tensioned on engaging the parking lock.

10. A device according to any of claims 1 to 9, **characterized in that** the transmission means include at least one connecting link whose one end is attached to the locking lever (50) and whose other end is attached to the transmission lever (30) and **in that** the connecting link has at least one slot, in which one of the points of engagement can slide up to a stop.

11. A device according to any of claims 1 to 10, **characterized in that** the transmission means include at least one prestressed tension spring (70), whose one end is attached to a point of engagement (52) of the locking lever (50) and whose other end is attached to a point of engagement (33, 37) of the at least one transmission lever (30), wherein at least one end of the tension spring (70) has a loop (70) extending in the longitudinal direction, in which one of the points of engagement (52) can slide up to a stop.

12. A device according to any of claims 1 to 11, **characterized in that** the first operating element (12) engages the transmission lever (30) indirectly or directly.

13. A device according to any of claims 1 to 12, **characterized in that** the transmission lever (30) has three arms (32, 34, 36) extending substantially radially from the axis of rotation (66), preferably lying in one plane, wherein respective ones of the transmission means (38, 40) engage on two outer arms (32, 36), which include an angle of about 90°, and the first operating element (12) engages indirectly or directly on a middle arm (34) which lies approximately in the middle between the outer arms (32, 36).

14. A device according to any of claims 1 to 13, **characterized in that** a spring arrangement with at least one prestressed spring element (60) is introduced between the first operating element (12) and the transmission shaft (22) or the transmission lever (30) and is so designed that its length remains constant under small forces in tension and compression but can reduce or increase on exceeding a predetermined spring tension.

## Revendications

1. Dispositif de commande pour la boîte de vitesses d'un véhicule agricole ou industriel comportant un premier élément de commande (12), qui agit sur des moyens d'actionnement pour régler au choix la boîte de vitesses dans une position neutre ou dans au moins une position de démultiplication, comportant un second élément de commande (18), qui est utilisé au moins pour l'enclenchement et le désenclenchement d'un dispositif de blocage de parcage, et des moyens pour verrouiller les moyens d'actionnement au moyen du second élément de commande (18) de telle sorte que lors de l'enclenchement du dispositif de blocage de parcage, les moyens d'actionnement passent dans leur position neutre et sont retenus dans la position neutre tant que l'élément de commande (18) est bloqué dans sa position de parcage, et dans lequel les moyens d'actionnement contiennent un arbre de transmission rotatif (22) comportant au moins un levier de transmission (30) qui est solidaire en rotation et fait saillie radialement, et au moins un levier de verrouillage (5) peut être influencé par le second élément d'actionnement (18) et dans lequel entre le levier de verrouillage (50) et le levier de transmission (30) sont disposés des moyens de transmission (38, 40), qui lors de l'enclenchement du système de blocage de parcage, transmettent des forces du levier de verrouillage (50) au levier de transmission (30) de manière à amener l'arbre de transmission (22) dans sa position neutre ou à le maintenir dans cette position, **caractérisé en ce qu'**on utilise comme moyens de transmission (38, 40) deux éléments de traction, qui, à l'état bandé, transmettent des forces de traction et dont des premières extrémités respectives attaquent le levier de verrouillage (52) et dont les secondes extrémités attaquent deux autres points différents d'attaque (33, 37) du levier de transmission (30), et dans lequel les points d'attaque (52) du levier de verrouillage (50) et les points d'attaque (33, 37) du levier de transmission (30) ainsi que l'agencement des éléments de traction sont choisis de telle sorte que le levier de transmission (30) peut pivoter depuis sa position neutre médiane (26) pour venir dans l'une de ses positions de démultiplication (24, 28) dans les deux directions, dans la mesure où le levier de verrouillage (50) est situé dans une position déverrouillée (G), et que les éléments de traction (38, 40) transmettent des forces de traction au levier de transmission (30) et placent ce dernier dans sa position neutre, dans la mesure où le levier de verrouillage (50) est amené dans sa position (P) de blocage de parcage.

2. Dispositif selon la revendication 1, **caractérisé en ce que** le système de blocage de parcage peut être enclenché uniquement lorsque simultanément l'arbre de transmission (22) passe dans sa position neutre.

3. Dispositif selon la revendication 1 ou 2, **caractérisé en ce que** l'arbre de transmission (22) peut être entraîné en rotation, sous l'effet du premier élément de commande (12), entre au moins une position de marche avant, une position médiane de neutre et au moins une position de marche arrière, et que les moyens de verrouillage sont agencés de telle sorte que lors de l'enclenchement du système de blocage de parcage, ils font tourner l'arbre de transmission (22) depuis sa position respective de marche avant ou sa position respective de marche arrière pour venir dans sa position neutre.

4. Dispositif selon l'une des revendications 1 à 3, **caractérisé en ce qu'**au choix une transmission peut être commutée, au moyen du second élément de commande (18), entre plusieurs rapports de transmission et une position neutre et qu'une position de parcage peut être enclenchée.

5. Dispositif selon l'une des revendications 1 à 4, **caractérisé en ce que** le levier de verrouillage (50) est un levier intermédiaire, qui peut tourner autour d'un axe (54), d'une tringlerie de blocage de parcage et comporte au moins un point d'attaque (52), qui est situé à l'extérieur de l'axe (54) et qui est attaqué par les moyens de transmission (38, 40).

6. Dispositif selon l'une des revendications 1 à 5, **caractérisé en ce que** le levier de transmission (30) comporte deux points d'attaque (33, 37), qui sont situés dans deux positions angulaires différentes de rotation de l'arbre de transmission (22) et qui sont attaqués par des moyens respectifs de transmission (28, 40), de telle sorte qu'une transmission de force est possible, grâce à laquelle l'arbre de transmission (22) peut pivoter d'une position de marche avant ou d'une position de marche arrière pour venir dans une position neutre médiane.

7. Dispositif selon l'une des revendications 1 à 6, **caractérisé en ce qu'**on utilise comme moyen de transmission (38, 40) au moins un mécanisme de traction, qui commute l'arbre de transmission (22) dans sa position neutre, lors de l'enclenchement du système de blocage de parcage.

8. Dispositif selon l'une des revendications 1 à 7, **caractérisé en ce que** les premières extrémités respectives des éléments de traction (38, 40) attaque un point commun d'attaque (52) du levier de verrouillage (50).

9. Dispositif selon l'une des revendications 1 à 8, **caractérisé en ce que** les moyens de transmission contiennent au moins un câble de traction (38, 40), dont une extrémité est articulée sur le levier de verrouillage (50) et dont l'autre extrémité articulée sur au moins un levier de transmission (30) et qui est lâche lorsque le système de blocage de parcage est désenclenché et est bandé lors de l'enclenchement du système de blocage de parcage.

10. Dispositif selon l'une des revendications 1 à 9, **caractérisé en ce que** les moyens de transmission contiennent au moins une patte de liaison, dont une extrémité attaque le levier de verrouillage (50) et dont l'autre extrémité attaque le levier de transmission (30), et que la patte de liaison comporte au moins un trou allongé, dans lequel l'un des points d'attaque peut être amenée par glissement jusqu'à une butée.

11. Dispositif selon l'une des revendications 1 à 10, **caractérisé en ce que** les moyens de transmission contiennent au moins un ressort de traction précontraint (70) dont une extrémité attaque un point d'attaque (52) du levier de verrouillage (50) et dont l'autre extrémité est accrochée à un point d'attaque (33, 37) du levier de transmission (30), au moins une extrémité du ressort de traction (70) comportant une boucle (74) qui s'étend dans la direction longitudinale et dans laquelle l'un des points d'attaque (52) peut se déplacer en glissant jusqu'à une butée.

12. Dispositif selon l'une des revendications 1 à 11, **caractérisé en ce que** le premier élément de commande (12) attaque directement ou indirectement le levier de transmission (30).

13. Dispositif selon l'une des revendications 1 à 12, **caractérisé en ce que** le levier de transmission (30) comporte trois branches (32, 34, 35), qui font saillie essentiellement radialement à partir de l'axe de rotation (66) et sont situées de préférence dans un plan, et que des moyens respectifs de transmission (38, 40) attaquent les deux branches extérieures (32, 36), qui font entre elles un angle d'environ 90° et que le premier élément de commande (10) attaque directement ou indirectement une branche médiane (34), qui est située approximativement au centre entre les branches extérieures (32, 36).

14. Dispositif selon l'une des revendications 1 à 13, **caractérisé en ce qu'**entre le premier élément de commande (12) et l'arbre de transmission (22) ou le levier de transmission (30) est inséré un dispositif à ressort comportant au moins un élément de ressort précontraint (60), qui est constitué de telle sorte que sa longueur reste constante pour une traction plus faible et pour des forces de pression plus faible et peut être réduite ou accrue lors du dépassement d'une précontrainte pouvant être prédéterminée du ressort.
